# EUROPÄISCHE PATENTSCHRIFT

(11) **EP 0 923 669 B1**
(45) Veröffentlichungstag und Bekanntmachung des Hinweises auf die Patenterteilung: **06.11.2002**
(21) Anmeldenummer: 98936265.2
(22) Anmeldetag: 30.06.1998
(51) Int. Cl.: F02M 25/08, F02D 35/00

(54) **VERFAHREN ZUM BETREIBEN EINER BRENNKRAFTMASCHINE INSBESONDERE EINES KRAFTFAHRZEUGS**
METHOD FOR OPERATING AN INTERNAL COMBUSTION ENGINE, ESPECIALLY OF AN AUTOMOBILE
FONCTIONNEMENT D'UN MOTEUR A COMBUSTION INTERNE, NOTAMMENT D'AUTOMOBILE

(30) Priorität: 04.07.1997 DE 19728554
(43) Veröffentlichungstag der Anmeldung: 23.06.1999
(73) Patentinhaber: ROBERT BOSCH GMBH, 70442 Stuttgart (DE)
(72) Erfinder: MOSER, Winfried, D-71642 Ludwigsburg (DE); PHILIPP, Matthias, D-70439 Stuttgart (DE)
(86) Internationale Anmeldenummer: DE9801794
(87) Internationale Veröffentlichungsnummer: WO99001657

(56) Entgegenhaltungen:
- EP-A- 0 488 254
- DE-A- 19 547 916
- DE-A- 19 650 517
- FR-A- 2 759 420
- PATENT ABSTRACTS OF JAPAN vol. 98, no. 6 & JP 10 047172 A (NISSAN MOTOR CO), 17. Februar 1998

## Beschreibung

Die Erfindung betrifft ein Verfahren zum Betreiben einer Brennkraftmaschine sowie eine Brennkraftmaschine insbesondere für ein Kraftfahrzeug nach den Oberbegriffen der Ansprüche 1 und 10.

Ein derartiges System zur direkten Einspritzung von Kraftstoff in den Brennraum einer Brennkraftmaschine ist aus der EP 488 254 A1 bekannt.

Es wird als erste Betriebsart ein sogenannter Schichtbetrieb und als zweite Betriebsart ein sogenannter Homogenbetrieb unterschieden. Der Schichtbetrieb wird insbesondere bei kleineren Lasten verwendet, während der Homogenbetrieb bei größeren, an der Brennkraftmaschine anliegenden Lasten zur Anwendung kommt. Im Schichtbetrieb wird der Kraftstoff während der Verdichtungsphase der Brennkraftmaschine in den Brennraum, und zwar dort in die unmittelbare Umgebung einer Zündkerze eingespritzt. Dies hat zur Folge, dass keine gleichmäßige Verteilung des Kraftstoffs in dem Brennraum mehr erfolgen kann, sondern dass der Kraftstoff sofort von der Zündkerze entzündet wird. Der Vorteil des Schichtbetriebs liegt darin, dass dort mit einer sehr geringen Kraftstoffmenge die anliegenden kleineren Lasten von der Brennkraftmaschine ausgeführt werden können. Größere Lasten können allerdings nicht durch den Schichtbetrieb erfüllt werden. Im für derartige größere Lasten vorgesehenen Homogenbetrieb wird der Kraftstoff während der Ansaugphase der Brennkraftmaschine eingespritzt, so dass eine Verwirbelung und damit eine Verteilung des Kraftstoffs in dem Brennraum noch ohne weiteres erfolgen kann. Insoweit entspricht der Homogenbetrieb etwa der Betriebsweise von Brennkraftmaschinen, bei denen in herkömmlicher Weise Kraftstoff in ein Ansaugrohr eingespritzt wird.

Weiterhin wird in der zweiten Betriebsart aus einem Behälter verdunsteter Kraftstoff dem Brennraum zugeführt. Zu diesem Zweck ist bei einer Brennkraftmaschine der eingangs genannten Art eine entsprechende Leitung vorgesehen.

Der aus dem Behälter verdunstete Kraftstoff wird aufgefangen und über die Leitung dem Brennraum und damit der Verbrennung zugeführt. Auf diese Weise wird erreicht, dass der verdunstete Kraftstoff nicht in die Atmosphäre entweicht und damit ungenutzt bleibt, sondern dass dieser verdunstete Kraftstoff zum Antrieb der Brennkraftmaschine mitverwendet wird. Insgesamt hat dies nicht nur den Vorteil einer Kraftstoffeinsparung, sondern auch einer geringeren Umweltbelastung durch den Betrieb der Brennkraftmaschine.

Es wird nun aber der verdunstete Kraftstoff nicht permanent dem Brennraum zugeführt, sondern nur unter bestimmten Bedingungen. Insbesondere wird der verdunstete Kraftstoff nur in der zweiten Betriebsart, also während des Homogenbetriebs der Brennkraftmaschine, dem Brennraum zugeführt. Auf diese Weise wird vermieden, dass in der ersten Betriebsart, also während des Schichtbetriebs, zu viel Kraftstoff in den Brennraum gelangt.

Wie erläutert, kann der Kraftstoff sich im Schichtbetrieb nicht mehr im Brennraum verteilen, so dass bei einer zu großen Kraftstoffmenge eine unvollsändige Verbrennung im Brennraum stattfinden würde. Dies würde nicht nur zu einem unnötigen hohen Kraftstoffverbrauch führen, sondern auch zu einer unerwünscht hohen Abgaserzeugung.

Durch die Zuführung des verdunsteten Kraftstoffs nur während des Homogenbetriebs und nicht während des Schichtbetriebs wird also einerseits der Vorteil der Kraftstoffeinsparung durch diese Zuführung während des Homogenbetriebs erlangt, andererseits aber der Nachteil einer unvollständigen Verbrennung und dergleichen während des Schichtbetriebs vermieden.

Weiterhin wird der verdunstete Kraftstoff über ein Aktivkohlefilter geführt, und es wird die Beladung des Aktivkohlefilters ermittelt. Das Aktivkohlefilter dient zum Auffangen des verdunsteten Kraftstoffs. Während des Betriebs der Brennkraftmaschine muß dieses Aktivkohlefilter ständig regeneriert werden, damit es nicht überläuft. Zu diesem Zweck wird mit Hilfe der Lambda-Regelung der Brennkraftmaschine die Beladung des Aktivkohlefilters, also dessen Füllstand ermittelt. Auf diese Weise kann dann die Brennkraftmaschine derart gesteuert und/oder geregelt werden, dass ein Überlaufen des Aktivkohlefilters sicher vermieden wird.

Aufgabe der Erfindung ist es, ein Verfahren zum Betreiben einer Brennkraftmaschine sowie eine Brennkraftmaschine zu schaffen, mit dem bzw. mit der eine möglichst optimale Regenerierung des Aktivkohlefilters möglich ist.

Erfindungsgemäß wird diese Aufgabe dadurch gelöst, dass die zweite Betriebsart so lange beibehalten wird, bis die Beladung des Aktivkohlefilters kleiner wird als ein vorgegebener zweiter Wert. Auf diese Weise wird erreicht, dass bei einer zu hohen Beladung des Aktivkohlefilters die Brennkraftmaschine noch so lange im Homogenbetrieb betrieben wird, bis die Beladung wieder unter den genannten zweiten Wert abgesunken ist. Durch diese Vorgehensweise wird ein Überlaufen des Aktivkohlefilters vermieden.

Besonders zweckmäßig ist es, wenn die zweite Betriebsart nur dann beibehalten wird, wenn die Beladung des Aktivkohlefilters zuvor größer war als ein vorgegebener erster Wert. Auf diese Weise wird ein kurz aufeinanderfolgendes Hin- und Herschalten zwischen den Betriebsarten vermieden. Es wird also eine Hysterese für das Beibehalten des Homogenbetriebs geschaffen, die unerwünschte Umschaltvorgänge verhindert.

Bei einer vorteilhaften Ausgestaltung der Erfindung wird nach dem Start der Brennkraftmaschine geprüft, ob eine ...

Ermittlung der Beladung des Aktivkohlefilters vorliegt, und es wird, falls keine Ermittlung vorliegt, nach einer vorgegebenen Zeitdauer die Brennkraftmaschine in die zweite Betriebsart überführt. Nach dem Start muß die Beladung des Aktivkohlefilters ermittelt werden, um ein Überlaufen zu vermeiden. Eine derartige Ermittlung der Beladung ist jedoch nur unter bestimmten Voraussetzungen möglich, beispielsweise nur im Homogenbetrieb und nur unter bestimmten stationären Bedingungen. Erfindungsgemäß wird nun geprüft, ob eine Ermittlung der Beladung des Aktivkohlefilters stattgefunden hat. Ist dies der Fall, so wird dieser Wert der Beladung weiterverwendet. Ist dies jedoch nicht der Fall, so wird nach der vorgegebenen Zeitdauer die Brennkraftmaschine derart gesteuert und/oder geregelt, daß die Beladung ermittelt werden kann. Zu diesem Zweck wird die Brennkraftmaschine in den Homogenbetrieb übergeführt, in dem die Beladung des Aktikohlefilters in jedem Fall ermittelt werden kann. Insgesamt wird auf diese Weise gewährleistet, daß nach dem Start der Brennkraftmaschine innerhalb der vorgegebenen Zeitdauer die Beladung des Aktivkohlefilters ermittelt werden kann und somit diese Beladung bei der Steuerung und/oder Regelung der Brennkraftmaschine und insbesondere bei der erfindungsgemäßen Zuführung von verdunstetem Kraftstoff zu dem Brennraum verwendet werden kann.

Besonders zweckmäßig ist es, wenn die Zeitdauer ab der letzten vorliegenden Ermittlung der Beladung berechnet wird. Auf diese Weise kann berücksichtigt werden, ob die Brennkraftmaschine eine längere oder eine kürzere Zeitdauer abgeschaltet war. Hat sich die Brennkraftmaschine eine längere Zeitdauer im ausgeschalteten Zustand befunden, so ist die vorgegebene Zeitdauer überschritten und es wird angenommen, daß sich der Aktivkohlefilter in dieser längeren Zeitdauer mit Kraftstoff gefüllt hat. Aus diesem Grund wird die Brennkraftmaschine in diesem Fall sofort in den Homogenbetrieb gesteuert und/oder geregelt. War die Brennkraftmaschine jedoch nur für eine kürzere Zeitdauer abgeschaltet, so wird die Brennkraftmaschine nicht zwingend in den Homogenbetrieb übergeführt, sondern es wird zuerst geprüft, ob die Beladung auch ohne diese Maßnahme ermittelt werden kann. Erst wenn auch nach Ablauf der vorgegebenen Zeitdauer die Beladung des Aktivkohlefilters nicht ermittelt worden ist, wird die Brennkraftmaschine in den Homogenbetrieb gesteuert und/oder geregelt.

Ebenfalls besonders zweckmäßig ist es, wenn die Zeitdauer ab dem Start der Brennkraftmaschine berechnet wird. Auf diese Weise wird erfindungsgemäß für die bestimmte Zeitdauer versucht, ob eine Beladung des Aktivkohlefilters ermittelt werden kann. Ist dies der Fall, so wird dieser Wert der Beladung weiterverwendet. Erst wenn auch nach Ablauf der vorgegebenen Zeitdauer die Beladung des Aktivkohlefilters nicht ermittelt worden ist, wird die Brennkraftmaschine in den Homogenbetrieb gesteuert und/oder geregelt. Diese Möglichkeit erlaubt einerseits eine schnelle Ermittlung der Beladung des Aktivkohlefilters, andererseits kann jedoch der Warmlauf der Brennkraftmaschine zumindest teilweise im kraftstoffsparenden Schichtbetrieb erfolgen.

Bei einer vorteilhaften Weiterbildung der Erfindung wird die zweite Betriebsart so lange beibehalten, bis eine Ermittlung der Beladung des Aktivkohlefilters vorliegt. Auf diese Weise wird die Ermittlung der Beladung in jedem Fall erzwungen, so daß danach in jedem Fall mit einem Wert für die Beladung des Aktivkohlefilters weitergearbeitet werden kann.

Bei einer anderen vorteilhaften Ausgestaltung der Erfindung wird nach dem Start die Brennkraftmaschine so lange in die zweite Betriebsart überführt, bis eine Ermittlung der Beladung des Aktivkohlefilters vorliegt. In diesem Fall wird also nicht zuerst eine Zeitdauer gewartet, ob eine Beladung auch ohne den Übergang in den Homogenbetrieb ermittelt werden kann, sondern es wird sofort in den Homogenbetrieb übergegangen, um auf diese Weise sofort die Beladung des Aktivkohlefilters zu ermitteln.

Von besonderer Bedeutung ist die Realisierung des erfindungsgemäßen Verfahrens in der Form eines elektrischen Speichermediums, das für ein Steuergerät einer Brennkraftmaschine insbesondere eines Kraftfahrzeugs vorgesehen ist. Dabei ist auf dem elektrischen Speichermedium ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem elektrischen Speichermedium abgespeichertes Programm realisiert, so daß dieses mit dem Programm versehene Speichermedium in gleicher Weise die Erfindung darstellt wie das Verfahren, zu dessen Ausführung das Programm geeignet ist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt ein schematisches Blockschaltbild eines Ausführungsbeispiels eines erfindungsgemäßen Systems zum Betreiben einer Brennkraftmaschine eines Kraftfahrzeugs,
- Figur 2: zeigt ein schematisches Zeitdiagramm zweier Zustände der Brennkraftmaschine der Figur 1, und
- Figur 3: zeigt ein schematisches Zeitdiagramm der Zustände der Figur 2 während des Starts der Brennkraftmaschine der Figur 1.

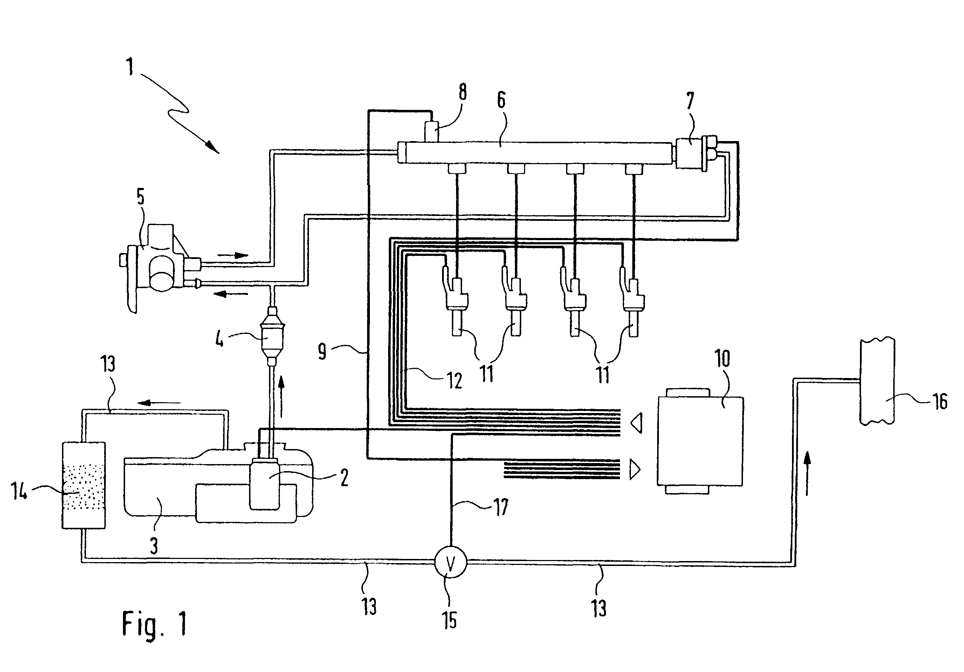

In der Figur 1 ist ein Kraftstoff Versorgungssystem 1 einer Brennkraftmaschine dargestellt, das für den Einsatz in einem Kraftfahrzeug vorgesehen ist. Die Brennkraftmaschine weist vier Zylinder und damit vier Brennräume auf. Bei der Brennkraftmaschine handelt es sich um eine Ausführungsform, bei der der Kraftstoff, vorzugsweise Benzin, direkt in die Brennräume eingespritzt wird.

Der Kraftstoff wird von einer Pumpe 2 aus einem Behälter 3 über ein Filter 4 zu einer weiteren Pumpe 5 transportiert, von der der Kraftstoff in eine Druckkammer 6 gepumpt wird. Mit Hilfe der Pumpen 2, 5 ist in der Druckkammer 6 ein relativ hoher, auf den Kraftstoff einwirkender Druck vorhanden. An die Druckkammer 6 ist ein Drucksteuerventil 7 und ein Drucksensor 8 angeschlossen, wobei mit letzterem der in der Druckkammer 6 vorhandene und auf den Kraftstoff einwirkende Druck gemessen werden kann. Der Drucksensor 8 erzeugt ein elektrisches Signal, das dem gemessenen Druck entspricht, und das über eine Leitung 9 ein elektrisches Steuergerät 10 beaufschlagt.

Vier Einspritzventile 11 sind an die Druckkammer 6 angeschlossen. Jedes der Einspritzventile 11 ist direkt einem Brennraum der Brennkraftmaschine zugeordnet. Durch die geschlossenen Einspritzventile 11 wird die Druckkammer 6 von dem jeweiligen Brennraum getrennt. Über elektrische Leitungen 12 sind die Einspritzventile 11 mit dem Steuergerät 10 verbunden. Zur Ansteuerung eines der Einspritzventile 11 erzeugt das Steuergerät 10 ein elektrisches Signal, mit dem das entsprechende Einspritzventil 11 in seinen geöffneten Zustand gesteuert wird. Die Länge des Signals entspricht der Einspritzdauer, während der Kraftstoff aus der Druckkammer 6 über das entsprechende Einspritzventil 11 in den zugehörigen Brennraum der Brennkraftmaschine eingespritzt wird.

Des weiteren ist der Behälter 3 über eine hydraulische Leitung 13 mit einem Aktivkohlefilter 14 verbunden. Die Leitung 13 ist dabei derart an den Behälter 3 angeschlossen, daß gas- oder dampfförmiger Kraftstoff, der in dem Behälter 3 verdunstet, von der Leitung 13 aufgenommen werden kann und durch diese zu dem Aktivkohlefilter 14 strömen kann. Dort wird der verdunstete Kraftstoff aufgefangen, so daß sich das Aktivkohlefilter 14 füllt.

Damit das Aktivkohlefilter 14 nicht überläuft, muß es regeneriert werden. Zu diesem Zweck führt die Leitung 13 von dem Aktivkohlefilter 14 über ein Magnetventil 15 zu einem Ansaugrohr 16, durch das Luft angesaugt und den Brennräumen der Brennkraftmaschine zugeführt wird. Mittels der angesaugten Luft wird dann der verdunstete und in das Ansaugrohr 17 gesaugte Kraftstoff den Brennräumen der Brennkraftmaschine zugeführt.

Das Magnetventil 15 ist über eine elektrische Leitung 17 mit dem Steuergerät 10 verbunden und damit von diesem ansteuerbar.

In einer ersten Betriebsart, dem Schichtbetrieb S der Brennkraftmaschine, wird der Kraftstoff von dem Einspritzventil 11 während einer durch einen Kolben hervorgerufenen Verdichtungsphase in den Brennraum eingespritzt, und zwar örtlich in die unmittelbare Umgebung einer Zündkerze sowie zeitlich unmittelbar vor dem oberen Totpunkt des Kolbens. Dann wird mit Hilfe der Zündkerze der Kraftstoff entzündet, so daß der Kolben in der nunmehr folgenden Arbeitsphase durch die Ausdehnung des entzündeten Kraftstoffs angetrieben wird.

In einer zweiten Betriebsart, dem Homogenbetrieb H der Brennkraftmaschine, wird der Kraftstoff von dem Einspritzventil 11 während einer durch den Kolben hervorgerufenen Ansaugphase in den Brennraum eingespritzt. Durch die gleichzeitig über das Ansaugrohr 16 angesaugte Luft wird der eingespritzte Kraftstoff verwirbelt und damit in dem Brennraum im wesentlichen gleichmäßig verteilt. Danach wird das Kraftstoff-Luft-Gemisch während der Verdichtungsphase verdichtet, um dann von der Zündkerze entzündet zu werden. Durch die Ausdehnung des entzündeten Kraftstoffs wird wiederum der Kolben angetrieben.

Die im Schichtbetrieb S und im Homogenbetrieb H von den Einspritzventilen 11 in die Brennräume jeweils eingespritzte Kraftstoffmenge bzw. -masse wird von dem Steuergerät 10 insbesondere im Hinblick auf einen geringen Kraftstoffverbrauch und/oder eine geringe Abgasentwicklung gesteuert und/oder geregelt. Zu diesem Zweck ist das Steuergerät 10 mit einem Mikroprozessor versehen, der in einem Speichermedium, insbesondere in einem Read-Only-Memory ein Programm abgespeichert hat, das dazu geeignet ist, die genannte Steuerung und/oder Regelung durchzuführen. Das Steuergerät 10 ist von Eingangssignalen beaufschlagt, die mittels Sensoren gemessene Betriebszustände der Brennkraftmaschine darstellen, und es erzeugt Ausgangssignale, mit denen über Aktoren das Verhalten der Brennkraftmaschine entsprechend der erwünschten Steuerung und/oder Regelung beeinflußt werden kann.

Das Magnetventil 15 wird von dem Steuergerät 10 derart angesteuert, daß es im Schichtbetrieb S der Brennkraftmaschine geschlossen und im Homogenbetrieb H der Brennkraftmaschine geöffnet ist. In dem Behälter 3 verdunsteter Kraftstoff gelangt also nur in der zweiten Betriebsart, dem Homogenbetrieb H, über das geöffnete Magnetventil 15 zu dem Ansaugrohr 17 und damit in den oder die Brennräume der Brennkraftmaschine. In der ersten Betriebsart, dem Schichtbetrieb S, gelangt jedoch kein in dem Behälter 3 verdunsteter Kraftstoff zu den Brennräumen der Brennkraftmaschine.

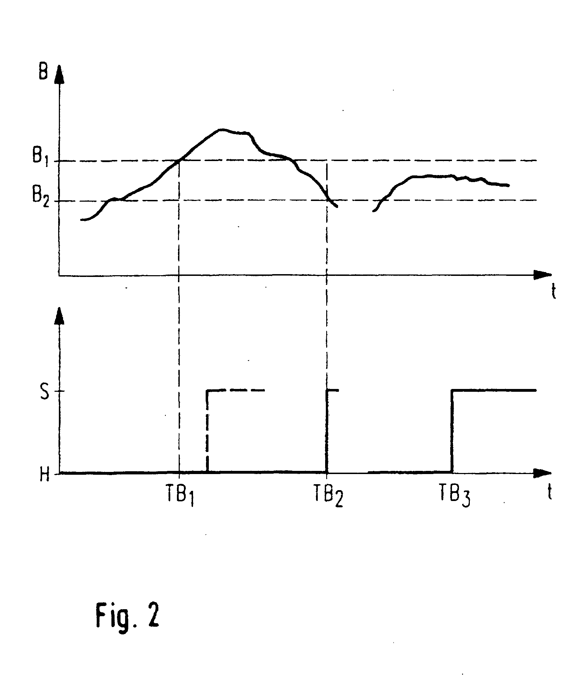

Dies hat zur Folge, daß das Aktivkohlefilter 14 nur im Homogenbetrieb H regeneriert wird, nicht jedoch im Schichtbetrieb S. Damit das Aktivkohlefilter 14 auch im Schichtbetrieb S nicht überlaufen kann, ist eine Steuerung bzw. Regelung des Magnetventils 15 durch das Steuergerät entsprechend der Figur 2 vorgesehen.

Entsprechend der Figur 2 ist eine Ermittlung der Beladung B des Aktivkohlefilters 14 durch das Steuergerät 10 möglich. Diese Ermittlung kann mit Hilfe einer Lambda-Regelung durchgeführt werden, die in dem Steuergerät 10 vorhanden ist. Bei geöffnetem Magnetventil 15 muß die Lambda-Regelung die von den Einspritzventilen 11 eingespritzte Kraftstoffmasse verringern, um dadurch den über das Aktivkohlefilter 14 hinzukommenden verdunsteten Kraftstoff auszugleichen. Aus der Verringerung kann das Steuergerät 10 auf die Konzentration und damit auf den Füllgrad bzw. die Beladung B des Aktivkohlefilters 14 schließen. Diese Beladung B ist in der Figur 2 dargestellt. Des weiteren ist in der Figur 2 gezeigt, in welcher Betriebsart sich die Brennkraftmaschine jeweils befindet, also im Schichtbetrieb S oder im Homogenbetrieb H.

Gemäß der Figur 2 steigt die Beladung B des Aktivkohlefilters 14 mit der Zeit t an und übersteigt im Zeitpunkt TB1 einen Wert B1 der Beladung B. Befand sich bisher die Brennkraftmaschine im Homogenbetrieb H, so ist es nach dem Zeitpunkt TB1 vorerst nicht mehr möglich, daß die Brennkraftmaschine in den Schichtbetrieb S übergeht. Dies ist beispielhaft in der Figur 1 durch einen nichtdurchgeführten und deshalb gestrichelten Übergang in den Schichtbetrieb S dargestellt.

Erst wenn die Beladung B in dem Zeitpunkt TB2 unter einen Wert B2 fällt, kann die Brennkraftmaschine von dem Steuergerät 10 in den Schichtbetrieb S gesteuert und/oder geregelt werden. Dies ist in der Figur 2 durch einen durchgeführten und deshalb durchgezogenen Übergang in den Schichtbetrieb S dargestellt. Der Wert B1 der Beladung B des Aktivkohlfilters 14 ist dabei größer oder gleich dem Wert B2 der Beladung B.

Die beschriebene Beibehaltung des Homogenbetriebs H findet jedoch nur statt, wenn die Beladung des Aktivkohlefilters 14 den Wert B1 überstiegen hat. War die Beladung B einerseits wohl größer als der Wert B2, jedoch kleiner als der Wert B1, so findet keine Beibehaltung des Homogenbetriebs H statt, sondern in diesem Fall kann sofort ein Übergang in den Schichtbetrieb S durch das Steuergerät 10 vorgenommen werden. Dies ist in dem Zeitpunkt TB3 der Figur 2 der Fall.

Während der Beibehaltung des Homogenbetriebs H wird die Brennkraftmaschine im Sinne eines homogenen Magerbetriebs eingestellt, damit der im Vergleich zum an sich möglichen Schichtbetrieb S höhere Kraftstoffverbrauch so gering wie möglich ist.

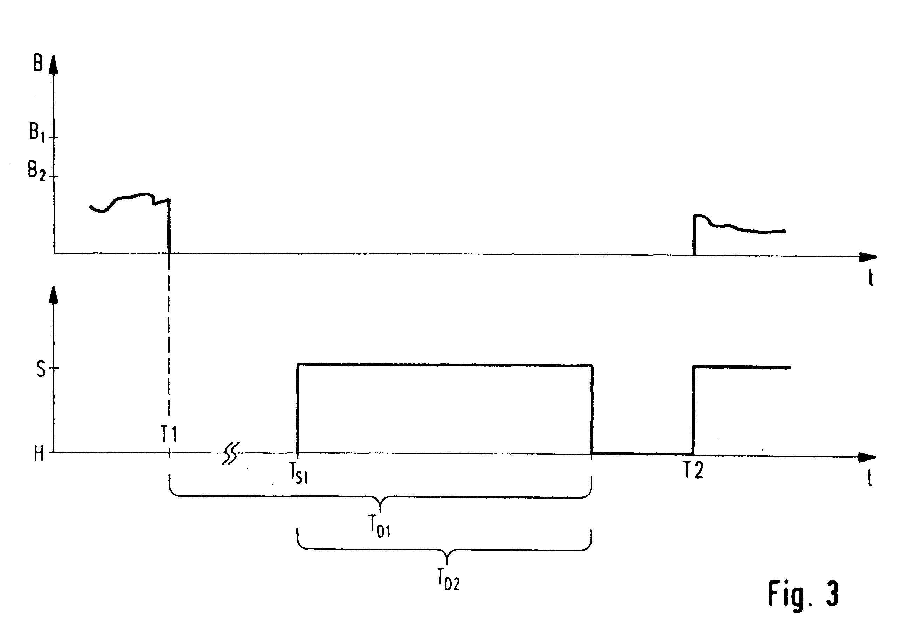

Nach dem Start der Brennkraftmaschine muß ebenfalls die Beladung des Aktivkohlefilters bei der Ansteuerung des Magnetventils 15 durch das Steuergerät 10 berücksichtigt werden. Dies wird anhand der Figur 3 vorgenommen, in der wie in der Figur 2 die Beladung B des Aktivkohlefilters 14 und die Betriebsart der Brennkraftmaschine über der Zeit t aufgetragen sind.

Nach dem Start der Brennkraftmaschine im Zeitpunkt TSt wird von dem Steuergerät 10 ständig überprüft, ob die Beladung B des Aktivkohlefilters 14 ermittelt werden kann. Dies hängt unter anderem von der Betriebsart der Brennkraftmaschine ab. Diese Überprüfung erfolgt für eine vorgegebene Zeitdauer.

Diese Zeitdauer kann entweder von der letzten vorgenommenen Ermittlung der Beladung des Aktivkohlefilters 14, also von einem Zeitpunkt T1 aus berechnet werden, wie dies in der Figur 3 mit der Zeitdauer TD1 dargestellt ist, oder es kann die Zeitdauer von dem Zeitpunkt TSt des Starts der Brennkraftmaschine aus berechnet werden, wie dies in der Figur 3 mit der Zeitdauer TD2 dargestellt ist. Die Zeitdauer TD1 ist dabei üblicherweise wesentlich größer als die Zeitdauer TD2. Beide Zeitdauern TD1 und TD2 können insbesondere in Abhängigkeit von der Lufttemperatur verändert werden, wobei die Zeitdauern TD1 und TD2 mit höherer Lufttemperatur kürzer sind.

Kann während dieser Zeitdauer TD1 bzw. TD2 die Beladung B des Aktivkohlefilters 14 ermittelt werden, so wird dieser ermittelte Wert bei der Steuerung und/oder Regelung der Brennkraftmaschine und insbesondere bei der Steuerung und/oder Regelung des Magnetventils 15 verwendet.

Kann während dieser Zeitdauer TD1 bzw. TD2 jedoch keine Beladung B des Aktivkohlefilters 14 ermittelt werden, so wird die Brennkraftmaschine in den Homogenbetrieb H übergeführt und das Magnetventil 15 wird in jedem Fall geöffnet. Dies erfolgt in der Figur 3 am Ende der Zeitdauer TD1 bzw. TD2. Damit kann verdunsteter Kraftstoff aus dem Behälter 3 in das Ansaugrohr 17 gelangen und ein Überlaufen des Aktivkohlefilters 13 wird vermieden.

Des weiteren wird nunmehr der Homogenbetrieb H zumindest so lange aufrechterhalten, bis die Beladung B des Aktivkohlefilters 14 ermittelt worden ist. Dies ist in der Figur 3 in dem Zeitpunkt T2 der Fall. Mit dem dann vorliegenden Wert der Beladung B kann die weitere Steuerung und/oder Regelung der Brennkraftmaschine durch das Steuergerät 10 durchgeführt werden.

Alternativ ist es auch möglich, die Brennkraftmaschine nach deren Start sofort in den Homogenbetrieb H zu überführen und dort zumindest so lange zu belassen, bis die Beladung B des Aktivkohlefilters 14 ermittelt worden ist.

## Patentansprüche

1. Verfahren zum Betreiben einer Brennkraftmaschine insbesondere eines Kraftfahrzeugs, bei dem Kraftstoff entweder in einer ersten Betriebsart (S) während einer Verdichtungsphase oder in einer zweiten Betriebsart (H) während einer Ansaugphase direkt in einen Brennraum eingespritzt wird, bei dem in der zweiten Betriebsart (H) aus einem Behälter (3) verdunsteter Kraftstoff dem Brennraum zugeführt wird, bei dem der verdunstete Kraftstoff über ein Aktivkohlefilter (14) geführt wird, und bei dem die Beladung (B) des Aktivkohlefilters (14) ermittelt wird, **dadurch gekennzeichnet, dass** die zweite Betriebsart (H) so lange beibehalten wird, bis die Beladung (B) des Aktivkohlefilters (14) kleiner wird als ein vorgegebener zweiter Wert (B2).

2. Verfahren nach Anspruch 1, **dadurch gekennzeichnet, dass** die zweite Betriebsart (H) nur dann beibehalten wird, wenn die Beladung (B) des Aktivkohlefilters (14) zuvor größer war als ein vorgegebener erster Wert (B1).

3. Verfahren nach einem der Ansprüche 1 oder 2, **dadurch gekennzeichnet, dass** nach dem Start (TSt) der Brennkraftmaschine geprüft wird, ob eine Ermittlung der Beladung (B) des Aktivkohlefilters (14) vorliegt, und dass, falls keine Ermittlung vorliegt, nach einer vorgegebenen Zeitdauer (TD1 bzw. TD2) die Brennkraftmaschine in die zweite Betriebsart (H) überführt wird.

4. Verfahren nach Anspruch 3, **dadurch gekennzeichnet, dass** die Zeitdauer (TD1) ab der letzten vorliegenden Ermittlung (T1) der Beladung (B) berechnet wird.

5. Verfahren nach Anspruch 3, **dadurch gekennzeichnet, dass** die Zeitdauer (TD2) ab dem Start (TSt) der Brennkraftmaschine berechnet wird.

6. Verfahren nach einem der Ansprüche 3 bis 5, **dadurch gekennzeichnet, dass** die zweite Betriebsart (H) so lange beibehalten wird, bis eine Ermittlung (T2) der Beladung (B) des Aktivkohlefilters (14) vorliegt.

7. Verfahren nach einem der Ansprüche 1 oder 2, **dadurch gekennzeichnet, dass** nach dem Start (TSt) die Brennkraftmaschine so lange in die zweite Betriebsart (H) überführt wird, bis eine Ermittlung der Beladung (B) des Aktivkohlefilters (14) vorliegt.

8. Programm für ein Steuergerät (10) einer Brennkraftmaschine, das das Verfahren nach einem der vorstehenden Ansprüche durchführt, wenn es auf das Steuergerät (10) geladen und ausgeführt wird.

9. Programm nach Anspruch 8, **gekennzeichnet durch** dessen Speicherung auf einem elektrischen Speichermedium, insbesondere auf einem Read-Only-Memory.

10. Brennkraftmaschine insbesondere für ein Kraftfahrzeug, mit einem Einspritzventil (11), mit dem Kraftstoff entweder in einer ersten Betriebsart (S) während einer Verdichtungsphase oder in einer zweiten Betriebsart (H) während einer Ansaugphase direkt in einen Brennraum einspritzbar ist, mit einer Leitung (13), über die in der zweiten Betriebsart (H) aus einem Behälter (3) verdunsteter Kraftstoff dem Brennraum zuführbar ist, mit einem Aktivkohlefilter (14), das in der Leitung (13) zwischengeschaltet ist, sowie mit einem Steuergerät (10) zur Ermittlung der Beladung (B) des Aktivkohlefilters (14), **dadurch gekennzeichnet, dass** durch das Steuergerät (10) die zweite Betriebsart (H) so lange beibehalten werden kann, bis die Beladung (B) des Aktivkohlefilters (14) kleiner wird als ein vorgegebener zweiter Wert (B2).

11. Brennkraftmaschine nach Anspruch 10, **dadurch gekennzeichnet, dass** ein Sperrglied, insbesondere ein Magnetventil (15) vorgesehen ist, das in der Leitung (13) zwischengeschaltet ist.

12. Brennkraftmaschine nach einem der Ansprüche 10 oder 11, **dadurch gekennzeichnet, dass** die Leitung (13) in ein den Brennräumen vorgeordnetes Ansaugrohr (17) mündet.

## Claims

1. Method for operating an internal combustion engine in particular of a motor vehicle, in which fuel is injected directly into a combustion chamber, either, in a first operating mode (S) during a compression phase or, in a second operating mode (H), during an induction phase, in which, in the second operating mode (H), fuel which has evaporated out of a tank (3) is fed to the combustion chamber, in which the evaporated fuel is guided by an activated carbon filter (14), and in which the loading (B) of the activated carbon filter (14) is determined, **characterized in that** the second operating mode (H) is maintained until the loading (B) of the activated carbon filter (14) becomes lower than a predetermined second value (B2).

2. Method according to Claim 1, **characterized in that** the second operating mode (H) is only maintained if the loading (B) of the activated carbon filter (14) was previously greater than a predetermined first value (B1).

3. Method according to one of Claims 1 or 2, **characterized in that**, after the starting (TSt) of the internal combustion engine, it is checked whether the loading (B) of the activated carbon filter (14) is determined, and **in that**, if it is not determined, the internal combustion engine is switched to the second operating mode (H) after a predetermined time (TD1 or TD2).

4. Method according to Claim 3, **characterized in that** the time (TD1) since the last determination (T1) of the loading (B) is calculated.

5. Method according to Claim 3, **characterized in that** the time (TD2) since the starting (TSt) of the internal combustion is calculated.

6. Method according to one of Claims 3 to 5, **characterized in that** the second operating mode (H) is maintained until there is a determination (T2) of the loading (B) of the activated carbon filter (14).

7. Method according to one of Claims 1 or 2, **characterized in that** after the starting (TSt) the internal combustion engine is switched to the second operating mode (H) until there is a determination of the loading (B) of the activated carbon filter (14).

8. Program for a control unit (10) of an internal combustion engine, which carries out the method according to one of the preceding claims when it is loaded onto and run on the control unit (10).

9. Program according to Claim 8, **characterized by** the fact that it is stored on an electrical storage medium, in particular on a read-only memory.

10. Internal combustion engine in particular for a motor vehicle, having an injection valve (11), by which fuel can be injected directly into a combustion chamber either, in a first operating mode (S), during a compression phase or, in a second operating mode (H), during an induction phase, having a line (13), via which, in the second operating mode (H), fuel which has evaporated from a tank (3) can be fed to the combustion chamber, having an activated carbon filter (14) which is connected into the line (13), and having a control unit (10) for determining the loading (B) of the activated carbon filter (14), **characterized in that** the control unit (10) can be used to maintain the second operating mode (H) until the loading (B) of the activated carbon filter (14) becomes lower than a predetermined second value (B2).

11. Internal combustion engine according to Claim 10, **characterized in that** a blocking member, in particular a solenoid valve (15), is provided and is connected into the line (13).

12. Internal combustion engine according to one of Claims 10 or 11, **characterized in that** the line (13) opens out into an induction pipe (17) arranged upstream of the combustion chambers.

## Revendications

1. Procédé de mise en oeuvre d'un moteur à combustion interne, notamment d'un véhicule automobile, selon lequel le carburant est injecté directement dans la chambre de combustion soit dans un premier mode de fonctionnement (S) pendant une phase de compression, soit dans un second mode de fonctionnement (H) pendant une phase d'admission, et dans le second mode de fonctionnement (H) on alimente la chambre de combustion avec du carburant évaporé du réservoir (3), ce carburant évaporé passant par un filtre à charbon actif (14) et selon ce procédé on détermine l'état de charge (B) du filtre à charbon actif (14),
**caractérisé en ce qu'**
on maintient le second mode de fonctionnement (H) jusqu'à ce que l'état de charge (B) du filtre à charbon actif (14) soit devenu inférieur à une seconde valeur (B2) prédéterminée.

2. Procédé selon la revendication 1,
**caractérisé en ce qu'**
on maintient le second mode de fonctionnement (H) que si l'état de charge (B) du filtre à charbon actif (14) était précédemment supérieur à une première valeur prédéterminée (B1).

3. Procédé selon l'une quelconque des revendications 1 ou 2,
**caractérisé en ce qu'**
après le démarrage (TSt) du moteur à combustion interne, on vérifie si l'on dispose de l'état de charge (B) du filtre à charbon actif (14) et au cas où on ne dispose pas de cet état, après une durée prédéterminée (TD1 ou TD2) on fait passer le moteur à combustion interne dans son second mode de fonctionnement (H).

4. Procédé selon la revendication 3,
**caractérisé en ce qu'**
on calcule la durée (TD1) à partir de la dernière détermination (T1 de l'état de charge (B).

5. Procédé selon la revendication 3,
**caractérisé en ce qu'**
on calcule la durée (TD2) à partir du démarrage (TSt) du moteur à combustion interne.

6. Procédé selon l'une quelconque des revendications 3 à 5,
**caractérisé en ce qu'**
on conserve le second mode de fonctionnement (H) jusqu'à ce que l'on dispose d'une détermination (T2) de l'état de charge (B) du filtre à charbon actif (14).

7. Procédé selon l'une quelconque des revendications 1 ou 2,
**caractérisé en ce qu'**
après le démarrage (TSt) on fait passer le moteur à combustion interne dans le second mode de fonctionnement (H) jusqu'à ce que l'on dispose de l'état de charge (B) du filtre à charbon actif (14).

8. Programme pour un appareil de commande (10) d'un moteur à combustion interne qui exécute le procédé selon l'une quelconque des revendications précédentes lorsqu'il est chargé dans l'appareil de commande (10) qui l'exécute.

9. Programme selon la revendication 8,
**caractérisé par**
son enregistrement sur un support de mémoire électrique, notamment une mémoire morte (ROM).

10. Moteur à combustion interne, notamment pour un véhicule automobile, comportant un injecteur (11) qui injecte du carburant directement dans une chambre de combustion, soit au cours d'un premier mode de fonctionnement (S) pendant une phase de compression, soit dans un second mode de fonctionnement (H) pendant une phase d'admission, ce moteur comprenant une conduite (13) par laquelle le carburant évaporé du réservoir (3) est fourni à la chambre de combustion dans le second mode de fonctionnement (H),
un filtre à charbon actif (14) monté dans la conduite (13) et un appareil de commande (10) pour déterminer l'état de charge (B) du filtre à charbon actif (14),
**caractérisé en ce que**
l'appareil de commande (10) maintient le second mode de fonctionnement (H) jusqu'à ce que l'état de charge (B) du filtre à charbon actif (14) soit inférieur à une seconde valeur prédéterminée (B2).

11. Moteur à combustion interne selon la revendication 10,
**caractérisé par**
un organe de blocage, notamment une électrovanne (15), monté dans la conduite (13).

12. Moteur à combustion interne selon l'une quelconque des revendications 10 ou 11,
**caractérisé en ce que**
la conduite (13) débouche dans une conduite d'admission (17) en amont des chambres de combustion.
